# EUROPEAN PATENT APPLICATION

(11) **EP 4 445 766 A1**
(43) Date of publication of application: **16.10.2024**
(21) Application number: 21967273.0
(22) Date of filing: 10.12.2021
(51) Int. Cl.: A24F 40/40, A24F 40/46

(54) **POWER SOURCE UNIT FOR AEROSOL GENERATING DEVICE, AND AEROSOL GENERATING DEVICE**

(71) Applicant: Japan Tobacco Inc., Tokyo 105-6927 (JP)
(72) Inventor: MARUBASHI, Keiji, Tokyo 130-8603 (JP)
(74) Representative: Hoffmann Eitle
(86) International application number: PCT/JP2021/045620
(87) International publication number: WO 2023/105781

(57) **Abstract**

This power source unit (100) for an aerosol generating device (10) comprises: a power source (ba); a main board (20); a heater unit (240B) that is configured to be able to heat at least one among an aerosol source (110) and a flavor source (120); and a heater FPC (24) that includes a pair of electrical insulating base bodies (31) and a conductive foil (32) that is disposed between the pair of electrical insulating base bodies (31), and connects the heater unit (240B) and the main board (20). A first conductive track (241) that transmits the power supplied from the power source (ba) to the heater unit (240B) is formed in the conductive foil (32). The first conductive track (241) has a first region (R1) in the vicinity of the heater unit (240B), and a second region (R2) positioned between the first region (R1) and the main board (20). The width of the first conductive track (241) in the second region (R2) is greater than the width of the first conductive track (241) in the first region (R1).

## Description

### TECHNICAL FIELD

The present invention relates to a power source unit for an aerosol generating device and an aerosol generating device.

### BACKGROUND ART

As a power source unit for an aerosol generating device such as a heating-type cigarette, there is known one in which a heater for heating a capsule or stick containing a flavor source therein is mounted.

Patent Literature 1 discloses a heater flexible printed circuit (FPC) including a heater unit (film heater) wound around a cylindrical heating chamber of an aerosol generating device. The heater FPC includes a heater tail unit connected to the heater unit, and a conductive track is continuously formed from the heater tail unit to the heater unit. The conductive track in the heater tail unit is connected to a circuit substrate connected to a power source, and serves as a power supply path for supplying electric power to the heater unit.

### CITATION LIST

### PATENT LITERATURE

Patent Literature 1: WO2021/043693

### SUMMARY OF INVENTION

### TECHNICAL PROBLEM

When electric power is supplied to the heater unit, the conductive track provided in the heater tail unit generates heat. In order to safely supply the electric power to the heater unit without affecting other components of the aerosol generating device, it is desirable not to dispose components around the heater tail unit.

However, with increasing functionality, various components such as an IC and a user interface are mounted on the power source unit for an aerosol generating device in addition to the heater. In addition, as a reduction in size of the power source unit, arrangement of such components is complicated. Therefore, it is often necessary to dispose components around the heater tail unit.

The present invention provides a power source unit for an aerosol generating device and an aerosol generating device in both of which electric power can be safely supplied from a power source to a heater unit.

### SOLUTION TO PROBLEM

A power source unit for an aerosol generating device of the present invention includes:
a power source;
a circuit substrate;
a heater unit configured to heat at least one of an aerosol source and a flavor source; and
a flexible wiring board including a pair of electrically insulating bases and a conductive foil disposed between the pair of electrically insulating bases, the flexible wiring board connecting the heater unit and the circuit substrate,
a first conductive track configured to transmit electric power supplied from the power source to the heater unit is formed in the conductive foil of the flexible wiring board,
the first conductive track includes:
   a first region in a vicinity of the heater unit, and
   a second region located between the first region and the circuit substrate, and
a width of the first conductive track in the second region is larger than a width of the first conductive track in the first region.

An aerosol generating device of the present invention includes:
a first cartridge configured to store the aerosol source; and
a second cartridge configured to store the flavor source.

### ADVANTAGEOUS EFFECTS OF INVENTION

According to the present invention, electric power can be safely supplied from the power source to the heater unit.

### BRIEF DESCRIPTION OF DRAWINGS

FIG. 1 is a perspective view of an aerosol generating device 10.
FIG. 2 is another perspective view of an aerosol generating device 10.
FIG. 3 is an exploded perspective view of the aerosol generating device 10.
FIG. 4 is a left side view of an internal unit 2.
FIG. 5 is a right side view of the internal unit 2.
FIG. 6 is a perspective view showing a configuration of a heating unit 60 and a circuit unit 70 of the internal unit 2.
FIG. 7 is a view showing a front surface 201 of a main substrate 20.
FIG. 8 is a view showing a back surface 202 of the main substrate 20.
FIG. 9 is an exploded perspective view of the heating unit 60 and a flow path forming member 19 shown in FIG. 6.
FIG. 10 is a developed view of a heater FPC 24 integrally formed with a sheet heater HTR.
FIG. 11 is a schematic cross-sectional view of the heater FPC 24 and the sheet heater HTR.
FIG. 12 is a schematic cross-sectional view taken along a line A-A in FIG. 10.

### DESCRIPTION OF EMBODIMENTS

Hereinafter, a power source unit for an aerosol generating device according to an embodiment of the present invention will be described.

### (Aerosol Generating Device)

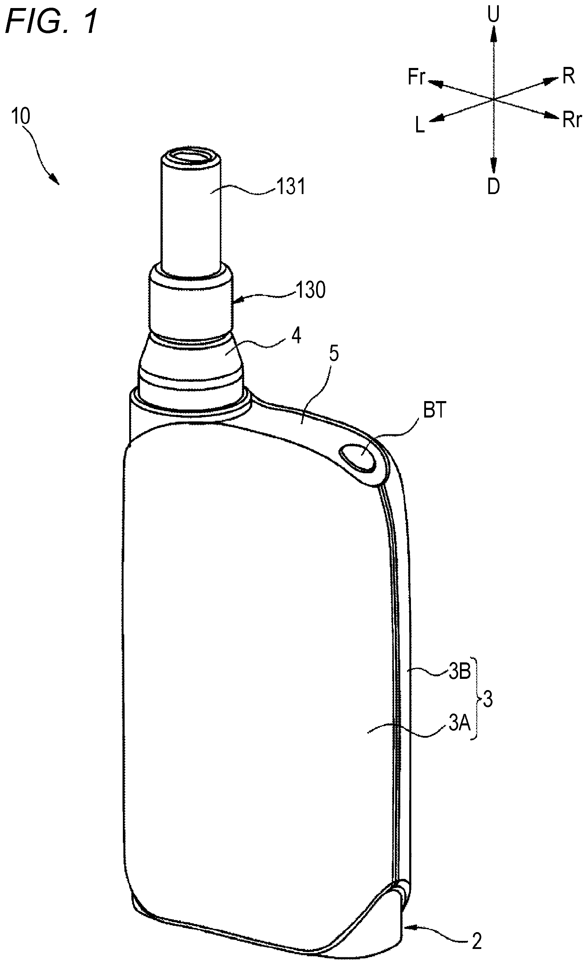

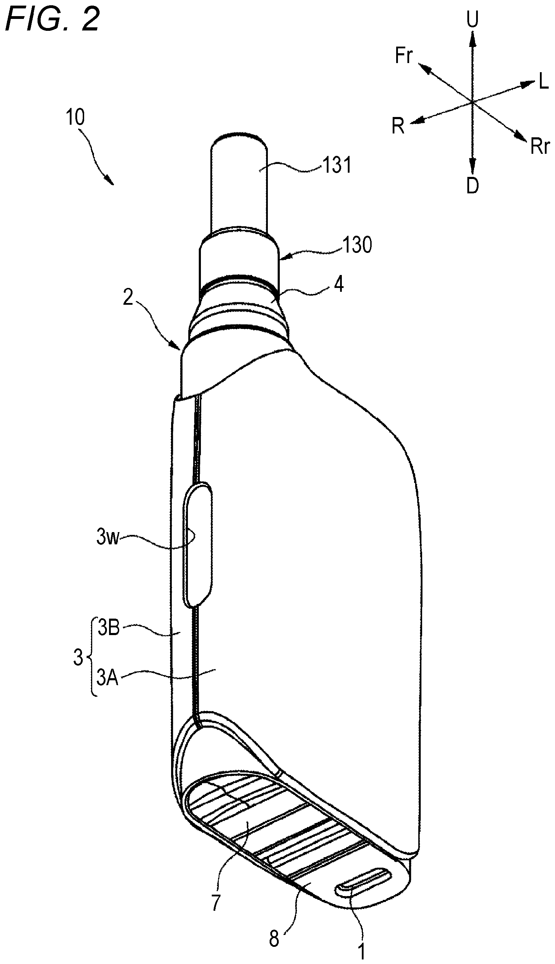

An aerosol generating device 10 is a device for generating flavored aerosol without combustion and inhaling the generated aerosol. The aerosol generating device 10 preferably has a size that fits in hands, and for example, as shown in FIGS. 1 and 2, has a rounded, substantially rectangular parallelepiped shape. The shape of the aerosol generating device 10 is not limited thereto, and may be a bar shape, an egg shape, or the like. In the following description, three directions orthogonal to one another in the aerosol generating device 10 are referred to as an upper-lower direction, a front-rear direction, and a left-right direction in descending order of length. In the following description, for convenience, as shown in FIGS. 1 to 9, front, rear, left, right, upper, and lower are defined, a front side is denoted by Fr, a rear side is denoted by Rr, a left side is denoted by L, a right side is denoted by R, an upper side is denoted by U, and a lower side is denoted by D.

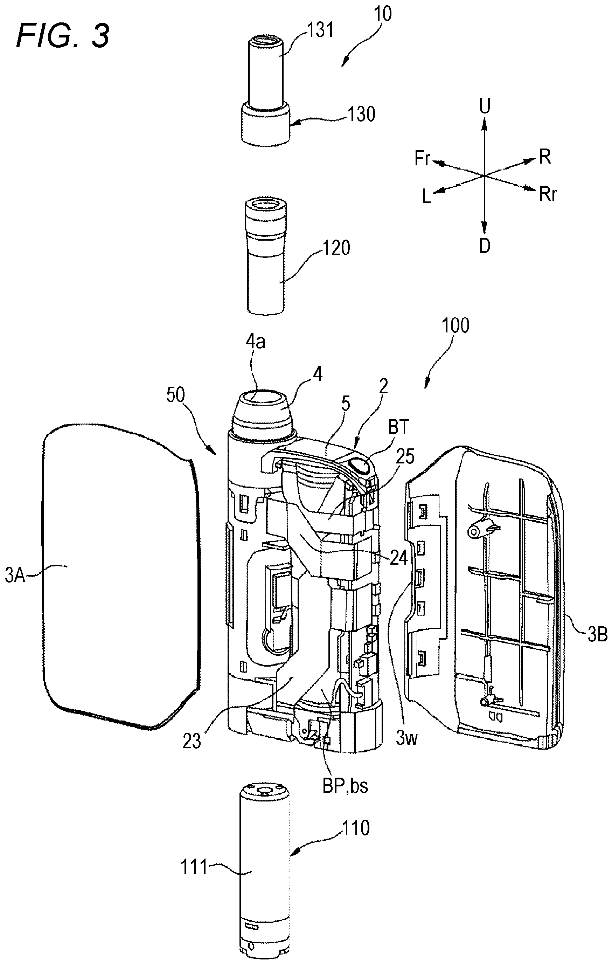

Referring also to FIG. 3, the aerosol generating device 10 includes a power source unit 100, a first cartridge 110, and a second cartridge 120. The first cartridge 110 and the second cartridge 120 are attachable to and detachable from the power source unit 100. In other words, the first cartridge 110 and the second cartridge 120 are replaceable.

### (Power Source Unit)

The power source unit 100 includes an internal unit 2 and a case 3, and at least a part of the internal unit 2 is accommodated in the case 3.

The case 3 includes a first case 3A and a second case 3B that are detachable in the left-right direction (thickness direction), the first case 3A and the second case 3B are assembled in the left-right direction (thickness direction), thereby forming a front surface, a rear surface, a left surface, and a right surface of the power source unit 100. Specifically, the first case 3A is supported on a left surface of a chassis 50 to be described later included in the internal unit 2, the second case 3B is supported on a right surface of the chassis 50, and the internal unit 2 is accommodated in the case 3. A capsule holder 4 is provided on a front side on the upper surface of the power source unit 100. The capsule holder 4 is provided with an opening portion 4a that is opened upward. The capsule holder 4 is configured such that the second cartridge 120 can be inserted through the opening portion 4a. On the second cartridge 120, a mouth piece 130 is detachably provided.

The upper surface of the power source unit 100 is formed by an organic light-emitting diode (OLED) cover 5 disposed behind the opening portion 4a, and the lower surface of the power source unit 100 is formed by a pivotable lower lid 7 and a lower cover 8 provided with a charging terminal 1.

An inclined surface inclined downward toward the rear is provided between the upper surface and the rear surface of the power source unit 100. The inclined surface is provided with an operation unit operable by a user. The operation unit of the present embodiment is a button-type switch BT, but may be implemented by a touch panel or the like. The operation unit is used to start/shut off/operate a micro controller unit (MCU) 6 and various sensors, which will be described later, based on a use intention of the user.

The charging terminal 1 accessible from the lower cover 8 is configured to be electrically connected to an external power source (not shown) capable of supplying electric power to the power source unit 100 to charge a power source ba provided in a battery pack BP. The charging terminal 1 is, for example, a receptacle into which a mating plug can be inserted. As the charging terminal 1, a receptacle into which various USB terminals or the like can be inserted can be used. As an example, in the present embodiment, the charging terminal 1 is a USB Type-C receptacle.

The charging terminal 1 may include, for example, a power receiving coil, and may be configured to receive, in a non-contact manner, electric power transmitted from the external power source. A wireless power transfer method in this case may be an electromagnetic induction type, a magnetic resonance type, or a combination of the electromagnetic induction type and the magnetic resonance type. As another example, the charging terminal 1 may be connectable to various USB terminals or the like, and may include the above-described power receiving coil.

As shown in FIGS. 3 to 6, the internal unit 2 includes the battery pack BP, the chassis 50, a heating unit 60, a circuit unit 70, a notification unit, and various sensors.

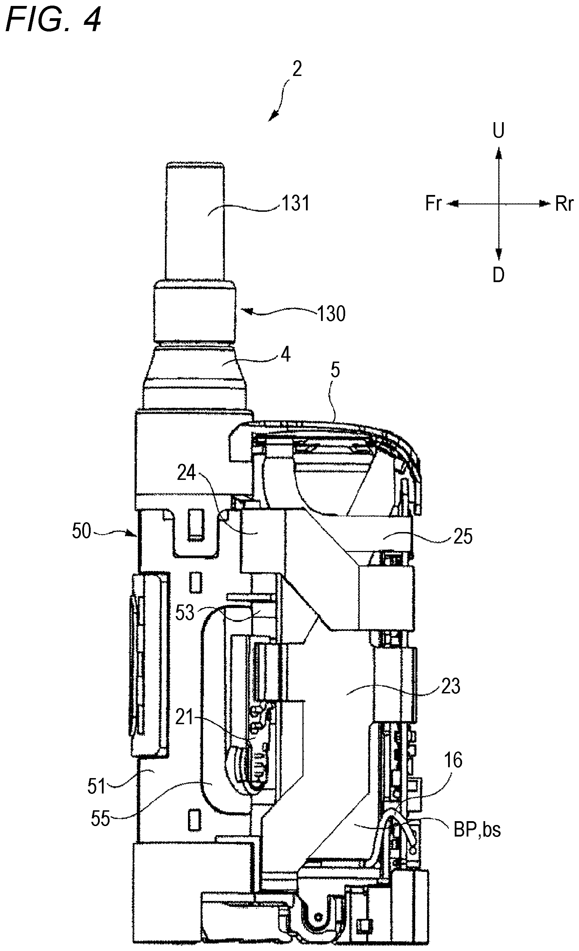

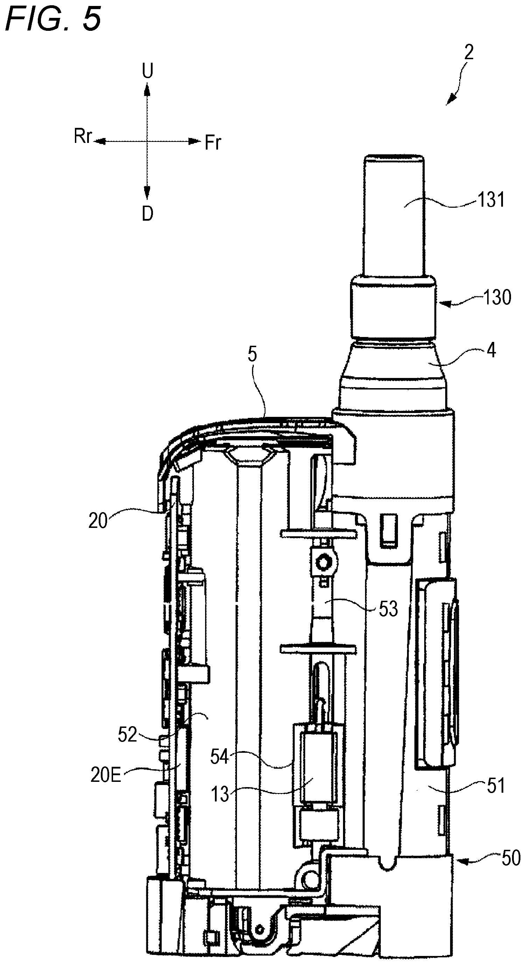

As shown in FIGS. 4 and 5, the chassis 50 includes a cylindrical cartridge holding portion 51 located on a front side, a half-cylindrical battery holding portion 52 located on a rear side and having a left side cut out, a plate-shaped coupling portion 53 coupling the cartridge holding portion 51 and the battery holding portion 52, a motor holding portion 54 provided below and on a right side of the coupling portion 53 in a manner of straddling the cartridge holding portion 51 and the battery holding portion 52, and a sensor holding portion 55 provided on a left rear side of the cartridge holding portion 51.

The first cartridge 110 is inserted into the cartridge holding portion 51 from below in a state where the lower lid 7 is opened. When the lower lid 7 is closed in a state where the first cartridge 110 is inserted, the first cartridge 110 is accommodated in the cartridge holding portion 51. The capsule holder 4 is attached to an upper portion of the cartridge holding portion 51. In the cartridge holding portion 51, a vertically long through hole is provided on a front side, and a remaining amount of an aerosol source of the first cartridge 110 and light of a light emitting diode (LED) that is not shown can be visually observed through a remaining amount confirmation window 3w provided at a joint of the first case 3A and the second case 3B. The LED is provided on a puff sensor substrate 21 to be described later. The first cartridge 110 will be described later.

The battery pack BP is disposed in the battery holding portion 52. The battery pack BP includes the power source ba and a power source thermistor for detecting a temperature of the power source ba. The power source ba is a chargeable secondary battery, an electric double-layer capacitor, or the like, and is preferably a lithium ion secondary battery. An electrolyte of the power source ba may be constituted by one or a combination of a gel electrolyte, an electrolytic solution, a solid electrolyte, and an ionic liquid.

A vibration motor 13 is disposed in the motor holding portion 54. An inhalation sensor 15 to be described later, which provides an output in response to an inhalation operation (puff operation) of the user, is disposed in the sensor holding portion 55.

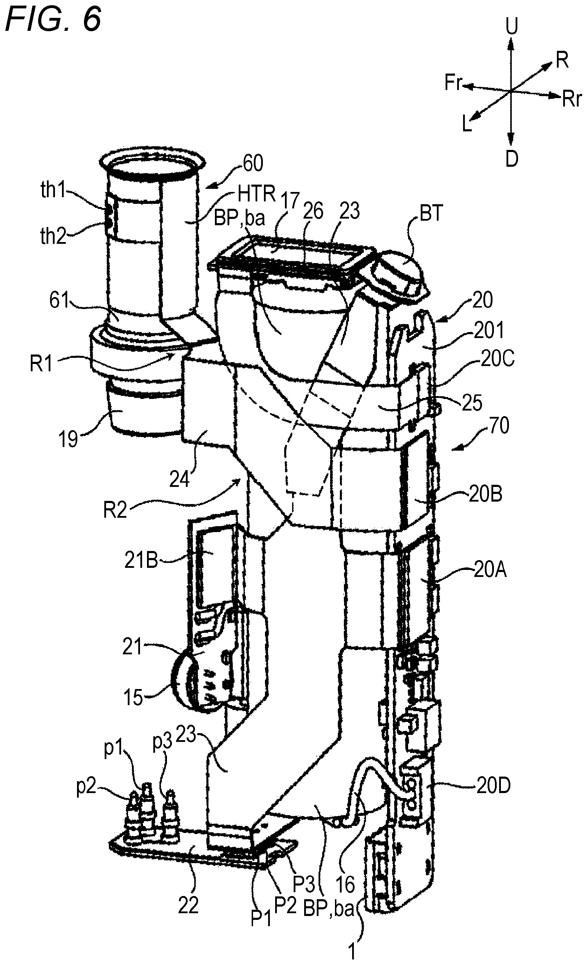

As shown in FIG. 6, the heating unit 60 includes a cylindrical heat transfer tube 61 and a sheet heater HTR wound around an outer periphery of the heat transfer tube 61. The capsule holder 4 is separately provided around the sheet heater HTR. An air layer between the capsule holder 4 and the sheet heater HTR functions as a heat insulator. A lower portion of the second cartridge 120 inserted from the opening portion 4a of the capsule holder 4 is accommodated in the heat transfer tube 61, and a lower portion of the second cartridge 120 is heated by the sheet heater HTR. Accordingly, as compared with a case where the heating unit 60 is not provided, a flavor source stored in the second cartridge 120 easily releases a flavor, so that the aerosol is easily flavored. Here, the sheet heater HTR corresponds to a "film heater" of the present invention.

The heating unit 60 may be an element capable of heating the second cartridge 120. Examples of the element include a resistance heating element. As the resistance heating element, for example, a heating element having a positive temperature coefficient (PTC) characteristic in which a resistance value increases with an increase in temperature is preferably used. Alternatively, a heating element having a negative temperature coefficient (NTC) characteristic in which the resistance value decreases with an increase in temperature may be used. The heating unit 60 has a function of defining a flow path of air to be supplied to the second cartridge 120 and a function of heating the second cartridge 120.

The notification unit notifies various kinds of information such as a charging state of the power source ba, a remaining amount of the first cartridge 110, and a remaining amount of the second cartridge 120. The notification unit of the present embodiment includes the LED and the vibration motor 13. The notification unit may be implemented by a light emitting element such as the LED, a vibration element such as the vibration motor 13, or a sound output element. The notification unit may be a combination of two or more elements among the light emitting element, the vibration element, and the sound output element.

The various sensors include the inhalation sensor 15 that detects the puff operation (inhalation operation) of the user, a heater temperature sensor that detects a temperature of the sheet heater HTR, and the like.

The inhalation sensor 15 includes, for example, a capacitor microphone, a pressure sensor, and a flow rate sensor. A plurality of inhalation sensors 15 may be disposed apart from each other, and the puff operation may be detected based on a difference between output values of the inhalation sensors 15. The heater temperature sensor includes, for example, a first thermistor th1 and a second thermistor th2. The first thermistor th1 and the second thermistor th2 are preferably in contact with or close to the sheet heater HTR. When the sheet heater HTR has the PTC characteristic or the NTC characteristic, the sheet heater HTR may be used for the heater temperature sensor. The heater temperature sensor includes two thermistors, but may include one thermistor. Hereinafter, the first thermistor th1 and the second thermistor th2 may be collectively referred to as a thermistor th. The heater temperature sensor is not limited to the thermistor th, and may be any sensor that detects the temperature of the sheet heater HTR. Here, the thermistor th corresponds to a "temperature detection unit" in the present invention.

The circuit unit 70 includes four rigid circuit substrates, three flexible printed circuits (FPCs), a plurality of integrated circuits (ICs), and a plurality of elements. The four circuit substrates include a main substrate 20, the puff sensor substrate 21, a pogo pin substrate 22, and an OLED substrate 26. The three FPCs include a main FPC 23, a heater FPC 24, and an OLED FPC 25.

The main substrate 20 is disposed between the battery pack BP and a rear surface of the case 3 (the rear surface of the power source unit 100) such that an element mounting surface faces the front-rear direction. The main substrate 20 is disposed on a side opposite to the heating unit 60 with respect to the power source ba. The main substrate 20 is configured by laminating a plurality of layers (six layers in the present embodiment) of substrates, and electronic components (elements) such as the MCU 6 and a charging IC 3 are mounted thereon. Here, the main substrate 20 corresponds to a "circuit substrate" in the present invention.

The MCU 6 is a control device that is connected to various sensor devices such as the inhalation sensor 15, the operation unit, the notification unit; and a memory or the like that stores the number of times of puff operations, and an energization time to a load and the sheet heater HTR, and performs various controls of the aerosol generating device 10. Specifically, the MCU 6 mainly includes a processor, and further includes a storage medium such as a random access memory (RAM) necessary for an operation of the processor and a read only memory (ROM) storing various kinds of information. For example, the processor in the present description is an electrical circuit in which circuit elements such as semiconductor devices are combined. A part of the elements (for example, the inhalation sensor 15 and the memory) connected to the MCU 6 may be provided inside the MCU 6 as a function of the MCU 6 itself.

Further, the charging IC 3 is an IC that performs charging control of the power source ba by the electric power received via the charging terminal 1, and supplies the electric power of the power source ba to the electronic components and the like on the main substrate 20.

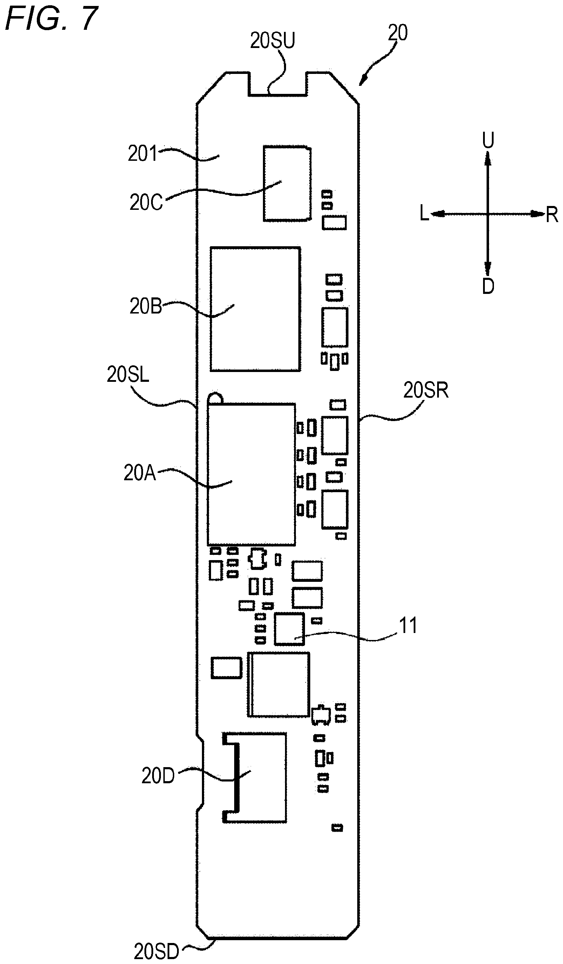

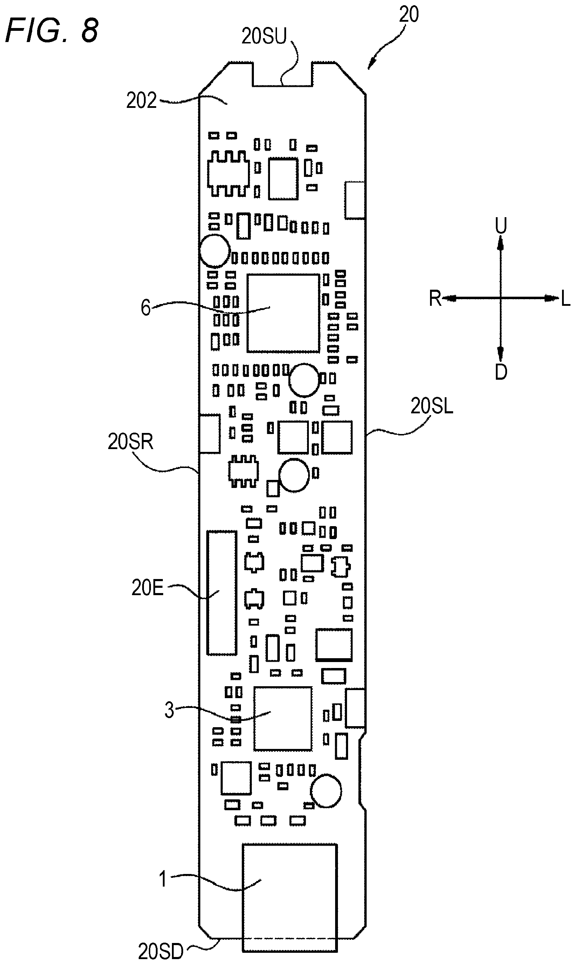

The main substrate 20 will be described more specifically with reference to FIGS. 7 and 8. Hereinafter, a surface of the main substrate 20 facing rearward is referred to as a front surface 201 for convenience, and a surface of the main substrate 20 facing forward is referred to as a back surface 202 for convenience. FIG. 7 is a diagram showing the front surface 201 of the main substrate 20, and FIG. 8 is a diagram showing the back surface 202 of the main substrate 20.

As shown in FIG. 8, the MCU 6 and the charging IC 3 are mounted on the back surface 202 of the main substrate 20 together with the charging terminal 1. A debug connector 20E is further mounted on the back surface 202. The debug connector 20E is an interface for rewriting a program of the MCU 6 from an external device such as a personal computer, and for example, a connector conforming to a Serial Wire Debug (SWD) standard is used. Meanwhile, as shown in FIG. 7, an OLED connector 20C, a heater connector 20B, a main connector 20A, and a battery connector 20D which is connected to the battery pack BP via a lead wire 16 (see FIG. 6) are mounted on the front surface 201 of the main substrate 20.

As shown in FIGS. 4 and 6, the puff sensor substrate 21 is disposed on the sensor holding portion 55 of the chassis 50 such that an element mounting surface faces a right front side and a left rear side. The inhalation sensor 15 is mounted on the puff sensor substrate 21.

As shown in FIG. 6, the OLED substrate 26 is disposed between the battery pack BP and the OLED cover 5 such that an element mounting surface faces the upper-lower direction. An OLED panel 17 is mounted on the OLED substrate 26.

As shown in FIG. 6, the pogo pin substrate 22 is disposed on the lower lid 7 such that an element mounting surface faces the upper-lower direction in a state where the lower lid 7 is closed. The pogo pin substrate 22 is provided with input-side contact points P1 to P3 to which electric power is supplied from the main substrate 20 via the main FPC 23, and pogo pins p1 to p3 which are connectors electrically connected to a load provided in the first cartridge 110. The input-side contact points P1 to P3 are electrically connected to the main FPC 23 only in a state where the lower lid 7 is closed. The three pogo pins p1 to p3 are provided at equal intervals in a peripheral direction, and at least two pogo pins are electrically connected to a positive terminal and a negative terminal of the first cartridge 110 accommodated in the cartridge holding portion 51.

A left side of the battery pack BP held by the battery holding portion 52 is exposed from the battery holding portion 52 due to the half-cylindrical battery holding portion 52. As shown in FIGS. 3, 4, and 6, the main FPC 23, the heater FPC 24, and the OLED FPC 25 are disposed to overlap one another in a space between the left side of the battery pack BP and the first case 3A, which is formed by cutting out the battery holding portion 52.

Among the three FPCs, the main FPC 23 is routed closest to battery pack BP, the OLED FPC 25 is routed to partially overlap the main FPC 23, and further the heater FPC 24 is routed to overlap the OLED FPC 25. That is, the heater FPC 24 to which the largest electric power is supplied among the three FPCs is routed to be farthest from the battery pack BP.

The OLED FPC 25 has one end connected to the OLED connector 20C of the main substrate 20 and the other end connected to the OLED substrate 26.

The main FPC 23 connects the main connector 20A of the main substrate 20, the switch BT of the operation unit, a connector 21B of the puff sensor substrate 21, and the input-side contact points P1 to P3 of the pogo pin substrate 22.

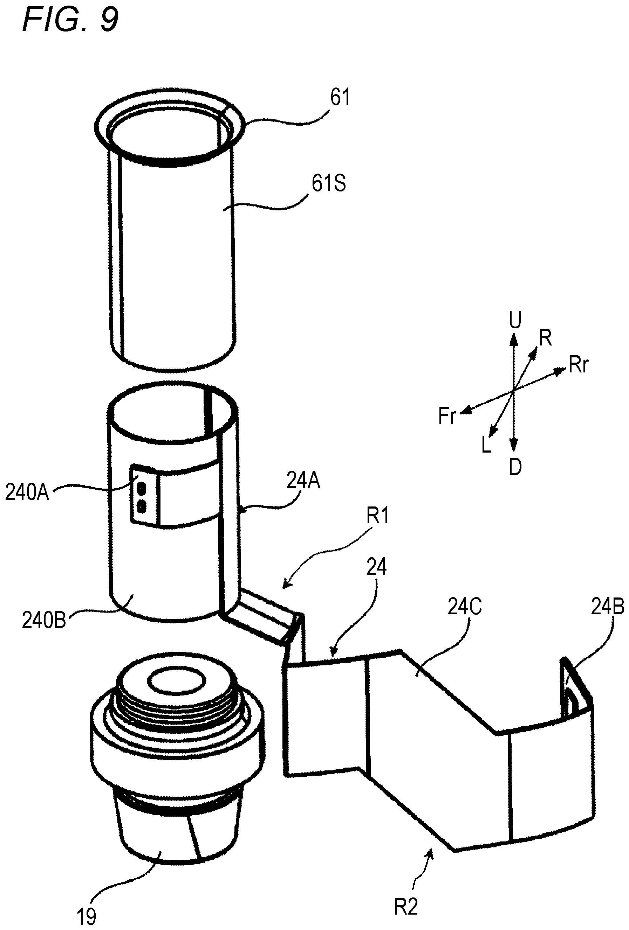

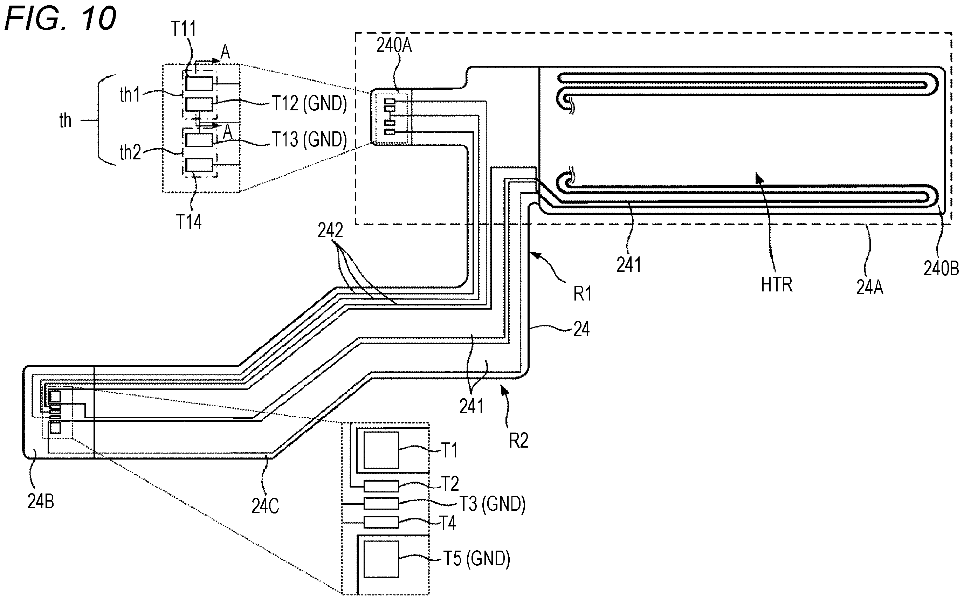

As shown in FIGS. 9 and 10, in the heater FPC 24, one end is a connector region 24B connected to the heater connector 20B of the main substrate 20, and the other end is integrally formed with the sheet heater HTR. Here, the heater FPC 24 corresponds to a "flexible wiring board" of the present invention. Details of the heater FPC 24 and the sheet heater HTR will be described later.

### (First Cartridge)

The first cartridge 110 includes, inside a cylindrical cartridge case 111, a reservoir that stores an aerosol source, an electrical load that atomizes the aerosol source, a wick that draws the aerosol source from the reservoir to the load, and an aerosol flow path through which aerosol generated by atomization of the aerosol source flows toward the second cartridge 120. The aerosol source contains a liquid such as glycerin, propylene glycol, or water.

The load is a heating element that heats, without combustion, the aerosol source by electric power supplied from the power source ba via the pogo pins p1 to p3 of the pogo pin substrate 22, and is implemented by, for example, a heating wire (coil) wound at a predetermined pitch. The load atomizes the aerosol source by heating the aerosol source. As the load, a heating resistor, a ceramic heater, an induction-heating-type heater, and the like may be used.

The aerosol flow path is connected to the second cartridge 120 via a flow path forming member 19 (see FIGS. 6 and 9) accommodated in the cartridge holding portion 51 of the chassis 50. The flow path forming member 19 functions as a pedestal with which a bottom of the second cartridge 120 abuts in a state where the second cartridge 120 is accommodated inside the heat transfer tube 61. The flow path forming member 19 is made of a material having a high heat insulating function, for example, silicone.

### (Second Cartridge)

The second cartridge 120 stores a flavor source. When the second cartridge 120 is heated by the sheet heater HTR, the flavor source is heated. The second cartridge 120 flavors the aerosol when the aerosol generated by atomizing the aerosol source by the load passes through the flavor source. As a raw material piece constituting the flavor source, it is possible to use a molded product obtained by molding a shredded tobacco or a tobacco raw material into granules. The flavor source may be formed of plants other than tobacco (for example, mint, Chinese medicine, and herb). The flavor source may contain a fragrance such as menthol.

The aerosol generating device 10 can generate flavored aerosol using the aerosol source and the flavor source. That is, the aerosol source and the flavor source constitute an aerosol generating source that generates the flavored aerosol.

The aerosol generating source in the aerosol generating device 10 is a portion to be replaced and used by the user. In this portion, for example, one first cartridge 110 and one or a plurality of (for example, five) second cartridges 120 are provided as one set to the user. The battery pack BP can be repeatedly charged and discharged as long as the power source ba is not significantly deteriorated. Accordingly, in the aerosol generating device 10, a replacement frequency of the power source unit 100 or the battery pack BP is lowest, a replacement frequency of the first cartridge 110 is second lowest, and a replacement frequency of the second cartridge 120 is highest. The first cartridge 110 and the second cartridge 120 may be integrated into one cartridge. Instead of the flavor source, a chemical agent or the like may be added to the aerosol source.

In the aerosol generating device 10 configured as described above, air flowing in from an air intake port (not shown) provided in the case 3 or the internal unit 2 passes near the load of the first cartridge 110. The load atomizes the aerosol source drawn from the reservoir by the wick. The aerosol generated by atomization flows through the aerosol flow path together with the air flowing in from the intake port, and is supplied to the second cartridge 120 via the flow path forming member 19. The aerosol supplied to the second cartridge 120 is flavored when passing through the flavor source, and is supplied to an inhalation port 131 of the mouth piece 130.

### (Heater FPC and Sheet Heater HTR)

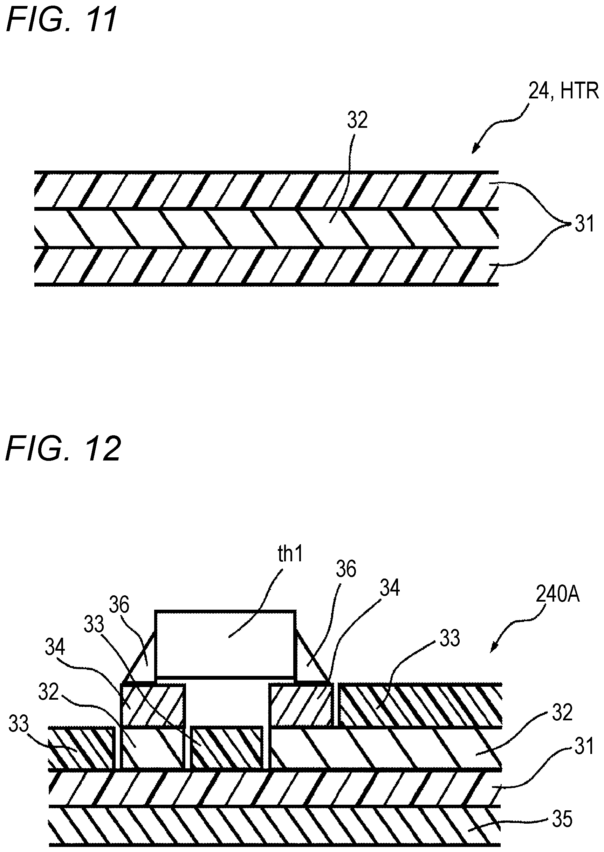

Hereinafter, the heater FPC 24 and the sheet heater HTR will be described in detail with reference to FIGS. 6 and 9 to 12. FIG. 11 is a schematic cross-sectional view of the heater FPC 24 and the sheet heater HTR, which may be different from actual dimensions.

The heater FPC 24 is a flexible wiring board having flexibility and, as shown in FIG. 11, includes a pair of film-shaped electrical insulators 31 and a conductive foil 32 disposed therebetween. The electrical insulator 31 is preferably made of a material excellent in heat resistance and electrical insulation, and is, for example, polyimide. The conductive foil 32 is preferably made of one or two or more metal materials such as copper, a nickel alloy, a chromium alloy, stainless steel, and platinum rhodium, and is, for example, a copper foil.

The heater FPC 24 includes a winding region 24A which is wound around and fixed to an outer periphery 61S of the heat transfer tube 61 formed of a tubular member, the connector region 24B which is inserted into the heater connector 20B of the main substrate 20, and a coupling region 24C which couples the winding region 24A and the connector region 24B.

In the connector region 24B of the heater FPC 24, a terminal T1, a terminal T2, a terminal T3, a terminal T4, and a terminal T5 are disposed adjacently in this order in the upper-lower direction. A first conductive track 241 to be described later is connected to the terminal T1 and the terminal T5, and a second conductive track 242 to be described later is connected to the terminal T2, the terminal T3, and the terminal T4. The terminal T1 is connected, via a sheet heater terminal provided in the heater connector 20B, to a DC/DC converter 11 that is mounted on the main substrate 20 and converts electric power supplied from the power source ba into desired electric power. The DC/DC converter 11 corresponds to a "power conversion unit" in the present invention. The terminal T5 is connected to a ground or a conductive pattern (ground line) connected to the ground (denoted by GND in FIG. 10). The terminal T2 is connected to a first thermistor terminal provided in the heater connector 20B, and an output corresponding to an electric resistance value (in other words, temperature) of the first thermistor th1 is input to the MCU 6. The terminal T4 is connected to a second thermistor terminal provided in the heater connector 20B, and an output corresponding to an electric resistance value (in other words, temperature) of the second thermistor th2 is input to the MCU 6. The terminal T3 is connected to a ground or a conductive pattern (ground line) connected to the ground (denoted by GND in FIG. 10).

As described above, the sheet heater HTR is integrally formed with the other end of the heater FPC 24 and coincides with the winding region 24A. That is, the sheet heater HTR is the same flexible wiring board as the heater FPC 24. The sheet heater HTR includes a thermistor mounting portion 240A and a heater unit 240B.

First, the heater unit 240B and the first conductive track 241 formed on the heater FPC 24 and the conductive foil 32 of the sheet heater HTR will be described.

As shown in FIG. 9, the heater unit 240B is wound around the outer periphery 61S of the heat transfer tube 61, and is configured to heat the second cartridge 120 via the heat transfer tube 61. The electric power to the heater unit 240B is supplied from the power source ba and transmitted to the first conductive track 241.

The first conductive track 241 is formed by etching while leaving a necessary portion of the conductive foil 32. The first conductive track 241 may be formed by coating the necessary conductive foil 32 instead of etching.

The first conductive track 241 is provided continuously from the connector region 24B to the heater unit 240B. Specifically, the first conductive track 241 is provided to extend from the terminal T1 to the heater unit 240B and return from the heater unit 240B to the terminal T5. Accordingly, the first conductive track 241 can transmit the electric power supplied from the power source ba to the heater unit 240B.

The first conductive track 241 includes, in a region between the main substrate 20 and the heater unit 240B, a region R1 in a vicinity of the heater unit 240B and a region R2 located between the region R1 and the main substrate 20. In a state where the power source unit 100 is assembled as shown in FIG. 6, the region R1 is located in front of the power source ba and is separated from the power source ba. The heater FPC 24 is folded back near a boundary between the region R1 and the region R2, and the region R2 is located on a left side of the power source ba and is disposed in a vicinity of the power source ba. The heater FPC 24 is folded back near a boundary between the region R2 and the connector region 24B, and the connector region 24B is located behind the power source ba and connected to the heater connector 20B. Here, the region R1 and the region R2 correspond to a "first region" and a "second region" in the present invention, respectively.

The first conductive track 241 in the heater unit 240B is formed in a meandering pattern including a plurality of straight portions extending in parallel and a plurality of arc portions connecting adjacent straight portions. The first conductive track 241 in the regions R1 and R2 connects the main substrate 20 and the heater unit 240B, and transmits the electric power supplied from the power source ba to the heater unit 240B.

A width of the first conductive track 241 varies depending on a region where the first conductive track 241 is provided. Here, the width of the first conductive track 241 refers to a length in a direction orthogonal to a direction in which a current flows. Specifically, as shown in FIG. 10, the width of the first conductive track 241 in the region R2 is formed to be larger than the width of the first conductive track 241 in the region R1. Further, the width of the first conductive track 241 in the region R1 is formed to be larger than the width of the first conductive track 241 in the heater unit 240B. The heater FPC 24 in the region R2 is larger in width than the heater FPC 24 in the region R1 such that the width of the first conductive track 241 in the region R2 can be increased.

Generally, when a thickness of the conductive track is constant, as the width of the conductive track increases, the current flows more easily and a resistance value decreases. Accordingly, the resistance value of the first conductive track 241 in each region increases in order of the region R2, the region R1, and the heater unit 240B. Since a heat generation amount decreases as the resistance value decreases, the heat generation amount of the first conductive track 241 in each region increases in order of the region R2, the region R1, and the heater unit 240B. Accordingly, since the resistance value increases and the heat generation amount increases in the heater unit 240B, the heater unit 240B can sufficiently generate heat. Meanwhile, in the region R1 and the region R2, the resistance value is small and the heat generation amount is also small, so that a heat loss can be reduced.

In a state where the power source unit 100 is assembled, the heater FPC 24 is closest to the power source ba in the region R2. In other words, a shortest distance between the region R2 and the power source ba is smaller than a shortest distance between the region R1 and the power source ba. In the present embodiment, the width of the first conductive track 241 in the region R2 closest to the power source ba is larger than the width of the first conductive track 241 in the region R1, thereby reducing the heat generation amount in the region R2. Accordingly, an influence on the power source ba caused by the heat generation of the heater FPC 24 can be reduced and safety can be improved.

Next, the thermistor mounting portion 240A of the sheet heater HTR and the second conductive track 242 formed on the heater FPC 24 and the conductive foil 32 of the sheet heater HTR will be described.

The thermistor th is mounted on the thermistor mounting portion 240A. The second conductive track 242 is provided on the thermistor mounting portion 240A and the heater FPC 24.

Similar to the first conductive track 241, the second conductive track 242 is formed by etching, coating, or the like of the conductive foil 32. The second conductive track 242 is provided continuously from the connector region 24B to the thermistor mounting portion 240A. Further, the second conductive track 242 is formed adjacent to the first conductive track 241 in the heater FPC 24.

The second conductive track 242 is provided with, in the thermistor mounting portion 240A, terminals T11 to T14 to which the first thermistor th1 and the second thermistor th2 are connected. A positive terminal of the first thermistor th1 is connected to the terminal T11, and a negative terminal of the first thermistor th1 is connected to the terminal T12. A negative terminal of the second thermistor th2 is connected to the terminal T13, and a positive terminal of the second thermistor th2 is connected to the terminal T14. In the present embodiment, the second conductive track 242 includes a conductive track having one end connected to the terminal T2 and the other end connected to the terminal T11; a conductive track having one end connected to the terminal T4 and the other end connected to the terminal T 14; and a conductive track having one end connected to the terminal T3 and the other end connected in parallel to the terminals T12 and T13. With such a configuration, the second conductive track 242 is connected to the MCU 6 via the terminal T2 and the terminal T4, and the MCU 6 can control the heater unit 240B based on the temperature of the heater unit 240B detected by the thermistor th.

A width of the second conductive track 242 is constant and is smaller than the width of the first conductive track 241. This is because the electric power flowing through the second conductive track 242 is smaller than the electric power for heating flowing through the first conductive track 241, and the heat generation amount in the second conductive track 242 is small even when the width of the second conductive track 242 is smaller than the width of the first conductive track 241. Since the width of the second conductive track 242 is formed to be smaller than the width of the first conductive track 241, the first conductive track 241 can be formed to be wide.

In this way, in the present embodiment, the second conductive track 242 for mounting the thermistor is formed on the heater FPC 24 and the conductive foil 32 of the sheet heater HTR, and the thermistor th is connected to the second conductive track 242 on the thermistor mounting portion 240A. Accordingly, as compared with a case where the thermistor th is provided by separately pulling a lead wire from the main substrate 20, assembling of the power source unit 100 can be simplified and the power source unit 100 can be reduced in cost and size. Further, since the second conductive track 242 is formed separately from the first conductive track 241 for transmitting the electric power to the heater unit 240B, the thermistor th can be prevented from being affected by a fluctuation of a potential of the first conductive track 241 connected to the heater unit 240B. Therefore, accuracy of the control using the thermistor th can be improved, and the safety of the power source unit 100 can be improved.

The heater unit 240B and the thermistor mounting portion 240A are disposed on opposite sides of the heater FPC 24 in a developed state of the sheet heater HTR as shown in FIG. 10. As shown in FIG. 6, the thermistor mounting portion 240A is disposed to overlap an outer periphery of the heater unit 240B after the heater unit 240B is wound around the outer periphery 61S of the heat transfer tube 61. After the sheet heater HTR is wound around the outer periphery 61S of the heat transfer tube 61, a shrink film that is not shown is wound around the outer periphery of the sheet heater HTR, and the sheet heater HTR is fixed to the outer periphery 61S of the heat transfer tube 61.

In the thermistor mounting portion 240A, as shown in FIG. 12, the electrical insulator 31 on a front surface side is peeled off and this portion is insulated by being coated with a resist 33. The first thermistor th1 is connected to the second conductive track 242 by soldering at both ends (portions connected to the terminals T11 and T12) in a longitudinal direction. Gold plating 34 is applied to solder portions 36 soldered on the second conductive track 242. The first thermistor th1 is disposed such that the longitudinal direction thereof is along an axial direction (upper-lower direction) of the heat transfer tube 61 in a state where the sheet heater HTR is wound around the outer periphery 61S of the heat transfer tube 61. The second thermistor th2 is also connected to the second conductive track 242 by the same configuration.

If the longitudinal direction of the thermistor th is arranged along a peripheral direction, when the sheet heater HTR is fixed by the shrink film, the thermistor th is affected by a curvature, and there is a risk that a large local stress acts on the solder portions 36 and cause the thermistor th to break. In the present embodiment, since the longitudinal direction of the thermistor th is arranged along the axial direction (upper-lower direction) of the heat transfer tube 61, the influence of the curvature on the thermistor th can be reduced, and application of a localized large stress to the solder portions 36 due to deflection when the shrink film is mounted can be prevented.

In this way, the thermistor th is disposed on a front surface of the thermistor mounting portion 240A. In the present embodiment, the front surface of the thermistor mounting portion 240A is configured such that the electrical insulator 31 on the front surface side is peeled off, but may be configured such that the second conductive track 242 and the thermistor th are directly connected. For example, a through hole for connecting the second conductive track 242 and the thermistor th may be provided in the electrical insulator 31 on the front surface side without peeling off the electrical insulator 31 on the front surface side. In addition, the thermistor th being directly connected to the front surface of the thermistor mounting portion 240A means being connected without using a wiring such as a lead wire, and another layer or a film may be laminated on the electrical insulator 31 on the front surface side.

As shown in FIG. 12, the thermistor mounting portion 240A is provided with a reinforcing plate 35. The reinforcing plate 35 is made of a material having higher rigidity than the electrical insulator 31 and the conductive foil 32, and is made of, for example, aluminum or stainless steel. The reinforcing plate 35 is provided on the electrical insulator 31 on a back surface side. By providing the reinforcing plate 35 on the thermistor mounting portion 240A, damage to the solder portions 36 due to a binding force from the shrink film can be prevented.

The reinforcing plate 35 has a rectangular shape having a long side and a short side, and is disposed such that the long side extends along the axial direction of the heat transfer tube 61. Accordingly, an influence of the curvature on the reinforcing plate 35 can be reduced, and application of a localized large stress to the solder portions 36 due to the deflection when the shrink film is mounted can be prevented. The shape of the reinforcing plate 35 is freely set, and the reinforcing plate 35 may have a shape having neither a long side nor a short side.

As shown in FIG. 9, the flow path forming member 19 is provided upstream (below) the heater unit 240B. Further, since the flow path forming member 19 is made of a material having a high heat insulating function, the heat of the heater unit 240B is easily absorbed by the flow path forming member 19. Therefore, in order to accurately detect the temperature of the heater unit 240B, the thermistor th is preferably disposed away from the flow path forming member 19. Therefore, the thermistor th mounted on the thermistor mounting portion 240A is disposed downstream (above) a center of the heater unit 240B in a flow direction (upper-lower direction) of the aerosol from the first cartridge 110 toward the second cartridge 120.

The above embodiments can be freely combined. The above embodiments are examples and are not intended to limit the scope of the invention. The above embodiments can be implemented in various other forms, and various omissions, replacements, and modifications can be made without departing from the gist of the invention. The above embodiments and modifications thereof are included within the scope and gist of the invention as well as within the scope of the invention described in the claims and its equivalents.

For example, in the present embodiment, the sheet heater HTR is configured to heat the second cartridge 120 that stores the flavor source, but may be configured to heat the first cartridge 110 that stores the aerosol source. The sheet heater HTR may be configured to heat both the first cartridge 110 and the second cartridge 120.

In the present description, at least the following matters are described. In parentheses, corresponding constituent components and the like in the above-mentioned embodiment are indicated, but the present invention is not limited thereto.
(1) A power source unit (power source unit 100) for an aerosol generating device (aerosol generating device 10), the power source unit including:
   a power source (power source ba);
   a circuit substrate (main substrate 20);
   a heater unit (heater unit 240B) configured to heat at least one of an aerosol source (first cartridge 110) and a flavor source (second cartridge 120); and
   a flexible wiring board (heater FPC 24) including a pair of electrically insulating bases (electrical insulators 31) and a conductive foil (conductive foil 32) disposed between the pair of electrically insulating bases, the flexible wiring board connecting the heater unit and the circuit substrate, in which
   a first conductive track (first conductive track 241) configured to transmit electric power supplied from the power source to the heater unit is formed in the conductive foil of the flexible wiring board,
   the first conductive track includes:
      a first region (region R1) in a vicinity of the heater unit, and
      a second region (region R2) located between the first region and the circuit substrate, and
   a width of the first conductive track in the second region is larger than a width of the first conductive track in the first region.

According to (1), since the width of the first conductive track in the second region is larger than the width of the first conductive track in the first region, a resistance value of the first conductive track in the second region can be reduced, and a heat generation amount of the first conductive track in the second region can be reduced. Accordingly, even when another component of the power source unit is disposed around the second region of the first conductive track, an influence of the heat generated in the second region on the other component can be reduced, and the electric power from the power source is safely transmitted to the heater unit.

(2) The power source unit for an aerosol generating device according to (1), in which
the circuit substrate is disposed on a side opposite to the heater unit with respect to the power source, and
a shortest distance between the second region and the power source is shorter than a shortest distance between the first region and the power source.

According to (2), even when the power source is disposed around the second region, an influence of the heat generated in the second region on the power source can be reduced, and thus the electric power from the power source is safely transmitted to the heater unit.

(3) The power source unit for an aerosol generating device according to (1) or (2), in which
the heater unit is a film heater (sheet heater HTR) formed integrally with the flexible wiring board.

According to (3), since the heater unit is the film heater integrally formed with the flexible wiring board, the number of components can be reduced.

(4) The power source unit for an aerosol generating device according to (3), in which
the first conductive track is provided continuously from the flexible wiring board to the film heater, and
the width of the first conductive track in the first region is larger than a width of the first conductive track in the film heater.

According to (4), since the width of the first conductive track in the first region is larger than the width of the first conductive track in the film heater, heat generation of the first conductive track in a region other than the film heater can be reduced.

(5) The power source unit for an aerosol generating device according to any one of (1) to (4), further including:
a temperature detection unit (thermistor th) configured to detect a temperature of the heater unit, in which
a second conductive track (second conductive track 242) connected to the temperature detection unit is formed in the conductive foil of the flexible wiring board, and
a width of the second conductive track is smaller than the width of the first conductive track in the first region.

According to (5), even when the second conductive track for the temperature detection unit is formed on the flexible wiring board, a degree of heat generation in the second conductive track is smaller than that in the first conductive track, and thus the width of the second conductive track can be made smaller. Accordingly, the width of the first conductive track in the first region and the second region of the flexible wiring board can be made larger

(6) The power source unit for an aerosol generating device according to (5), in which
the width of the second conductive track is constant.

According to (6), since the width of the second conductive track is constant, the width of the first conductive track can be made larger in any region of the first region and the second region.

(7) The power source unit for an aerosol generating device according to any one of (1) to (6), in which
a power conversion unit configured to convert electric power supplied from the power source is mounted on the circuit substrate, and
the first conductive track is connected to the power conversion unit via the flexible wiring board.

According to (7), since the power conversion unit that converts the electric power supplied from the power source is mounted on the circuit substrate, and the power conversion unit and the first conductive track are connected to each other, the first conductive track can properly transmit the electric power supplied from the power source to the heater unit.

(8) An aerosol generating device including:
the power source unit according to any one of (1) to (7);
a first cartridge (first cartridge 110) storing the aerosol source; and
a second cartridge (second cartridge 120) storing the flavor source.

According to (8), since the width of the first conductive track in the second region is larger than the width of the first conductive track in the first region, the resistance value of the first conductive track in the second region can be reduced, and the heat generation amount of the first conductive track in the second region can be reduced. Accordingly, even when another component of the power source unit is disposed around the second region of the first conductive track, an influence of the heat generated in the second region on the other component can be reduced, and the electric power from the power source is safely transmitted to the heater unit.

### REFERENCE SIGNS LIST

ba: power source
HTR: sheet heater (film heater)
R1: region (first region)
R2: region (second region)
th: thermistor (temperature detection unit)
10: aerosol generating device
100: power source Unit
110: first cartridge
120: second cartridge
11: DC/DC converter (power conversion unit)
20: main substrate (circuit substrate)
24: heater FPC (flexible wiring board)
240B: heater unit
241: first conductive track
242: second conductive track
31: electrical insulator
32: conductive foil

## Claims

1. A power source unit for an aerosol generating device, the power source unit comprising:
a power source;
a circuit substrate;
a heater unit configured to heat at least one of an aerosol source and a flavor source; and
a flexible wiring board including a pair of electrically insulating bases and a conductive foil disposed between the pair of electrically insulating bases, the flexible wiring board connecting the heater unit and the circuit substrate, wherein
a first conductive track configured to transmit electric power supplied from the power source to the heater unit is formed in the conductive foil of the flexible wiring board,
the first conductive track includes:
a first region in a vicinity of the heater unit, and
a second region located between the first region and the circuit substrate, and
a width of the first conductive track in the second region is larger than a width of the first conductive track in the first region.

2. The power source unit for an aerosol generating device according to claim 1, wherein
the circuit substrate is disposed on a side opposite to the heater unit with respect to the power source, and
a shortest distance between the second region and the power source is shorter than a shortest distance between the first region and the power source.

3. The power source unit for an aerosol generating device according to claim 1 or 2, wherein
the heater unit is a film heater formed integrally with the flexible wiring board.

4. The power source unit for an aerosol generating device according to claim 3, wherein
the first conductive track is provided continuously from the flexible wiring board to the film heater, and
the width of the first conductive track in the first region is larger than a width of the first conductive track in the film heater.

5. The power source unit for an aerosol generating device according to any one of claims 1 to 4, further comprising:
a temperature detection unit configured to detect a temperature of the heater unit, wherein
a second conductive track connected to the temperature detection unit is formed in the conductive foil of the flexible wiring board, and
a width of the second conductive track is smaller than the width of the first conductive track in the first region.

6. The power source unit for an aerosol generating device according to claim 5, wherein
the width of the second conductive track is constant.

7. The power source unit for an aerosol generating device according to any one of claims 1 to 6, wherein
a power conversion unit configured to convert electric power supplied from the power source is mounted on the circuit substrate, and
the first conductive track is connected to the power conversion unit via the flexible wiring board.

8. An aerosol generating device comprising:
the power source unit according to any one of claims 1 to 7;
a first cartridge storing the aerosol source; and
a second cartridge storing the flavor source.
